# EUROPEAN PATENT SPECIFICATION

(11) **EP 4 656 950 B1**
(45) Date of publication and mention of the grant of the patent: **09.12.2026**
(21) Application number: 24178895.9
(22) Date of filing: 29.05.2024
(51) Int. Cl.: F24C 15/20, B64D 11/04, F24C 15/32, F24C 15/00

(54) **STEAM OVEN FOR USE IN AN AIRCRAFT GALLEY AND METHOD OF RELEASING STEAM FROM SUCH AN OVEN**
DAMPFOFEN ZUR VERWENDUNG IN EINER FLUGZEUGKOMBÜSE UND VERFAHREN ZUM ABLASSEN VON DAMPF AUS EINEM SOLCHEN DAMPFOFEN
FOUR À VAPEUR POUR UTILISATION DANS UNE CUISINE D'AVION ET PROCÉDÉ DE DÉCHARGE DE LA VAPEUR D'UN TEL FOUR

(43) Date of publication of application: 03.12.2025
(73) Proprietor: B/E Aerospace, Inc., Winston Salem, NC 27105 (US)
(72) Inventor: VAN OOSTROM, Pieter, 6685 BG Haalderen (NL); PANJER, Frederik Adrian Stephan, 3953BW Maarsbergen (NL)
(74) Representative: Dehns

(56) References cited:
- EP-A1- 2 236 943
- EP-A1- 2 241 820
- EP-A1- 4 023 945
- WO-A1-2004/104483
- WO-A1-2018/217027

## Description

The present specification relates to a steam oven for use in an aircraft galley, and a method of redirecting steam in a steam oven for use in an aircraft galley.

Known steam ovens typically comprise an oven compartment into which water is injected and vaporised into steam by a heating assembly. The steam is circulated around the oven compartment to heat up food held within. The pressure within the oven compartment can be regulated by exhausting steam through valves. Part of the steam exhausted through the valves will be condensed using a condenser. A portion of the steam in the condenser may be condensed into liquid water, and the remaining steam is exhausted into the surrounding environment. In pressure-less steam ovens, steam will be exhausted from the heating compartment of the oven, but with the difference that there are no valves to regulate the pressure and there is typically no condenser.

Aircraft can be equipped with steam ovens in an aircraft galley in order to heat food for passengers. Steam ovens in aircraft galleys are typically designed to exhaust the steam into the rear of the galley, but this is where airflow is limited and critical items such as electrical connectors, ducting, wiring, and plumbing are located. When the steam condenses in this area, it can interfere with the normal functioning of these items by creating fungus, moisture damage, corrosion and/or short circuiting. Consequently, there are requirements within the aerospace industry for the amount of steam entering the rear of the galley to be limited. EP4023945A1 discloses an oven with an air curtain. WO2018/217027A1 discloses a steam cooker. WO2004/104483A1 discloses an oven with a steam module.

In a first aspect of the invention, there is provided a steam oven for use in an aircraft galley according to claim 1.

Optionally, the steam oven comprises a plurality of vents configured to direct at least the flow of air towards the front of the steam oven.

Optionally, the plurality of vents are downstream of the at least one diffuser, and are configured to direct the steam from the heating compartment with the flow of air towards the front of the steam oven.

Optionally, the plurality of vents are integrally formed with the at least one diffuser.

Optionally, the at least one fan is configured to drive the flow of air over at least one electronic component, the at least one electronic component being upstream of the at least one diffuser with respect to the flow of air.

The steam separator may be a condenser, a cyclone steam separator or a filtration membrane.

Optionally, the steam separator is a condenser, and the condenser comprises at least one heat transfer element on its outer surface.

Optionally, the steam separator comprises a liquid outlet configured to release separated water from the steam separator into the heating compartment of the steam oven.

Optionally, the at least one diffuser comprises a first diffuser and a second diffuser located towards opposing side walls of the housing, and the conduit is a T-shaped conduit connected to the first and second diffusers.

Optionally, the at least one fan comprises: a first fan configured to drive a first portion of the flow of air through the housing, wherein the first diffuser is configured to release the steam from the heating compartment into the first portion of the flow of air; and a second fan configured to drive a second portion of the flow of air through the housing, wherein the second diffuser is configured to release the steam from the heating compartment into the second portion of the flow of air.

In a second aspect of the invention, there is provided a method of releasing steam from a steam oven in an aircraft galley according to claim 12.

Optionally, the method includes directing at least the flow of air towards the front of the steam oven using a plurality of vents.

Certain embodiments of the present disclosure will now be described in greater detail, by way of example only and with reference to the following figures, in which:
Figure 1 shows a steam oven according to the prior art installed in a galley compartment;
Figure 2 shows a perspective view of a steam oven according to the prior art;
Figure 3 shows a rear view of a steam oven with a condenser arrangement;
Figure 4 shows a top view of a steam oven with a condenser arrangement;
Figure 5 shows a top view of a steam oven with an alternative arrangement;
Figure 6 shows a perspective view of a condenser.

As described herein, according to a first example, there is provided steam oven for use in an aircraft galley, comprising: housing; a heating compartment comprising an outlet configured to expel at least steam from the heating compartment; at least one diffuser; a conduit connecting the outlet of the heating compartment to an inlet of the at least one diffuser; and at least one fan configured to drive a flow of air through the housing, and to expel the flow of air from the housing and towards a front of the steam oven; wherein the at least one diffuser is configured to release the steam from the heating compartment into the flow of air, such that the steam is expelled with the flow of air from the housing and towards the front of the steam oven.

Advantageously, the steam oven is configured such that the exhaust steam is redirected towards the front of the steam oven with the flow of air, rather than towards the back of the steam oven. This may allow the steam to be exhausted out of the galley compartment that the steam oven is installed in, and into the dry aircraft cabin environment, where it can dissipate. As such, the steam oven is configured such that condensation of the exhaust steam on components in the steam oven and towards the back of the galley (such as electrical connectors, ducting, wiring, and plumbing) is reduced and/or eliminated. This may prevent malfunctioning of the components as well as preventing growth of undesired fungus on the components.

In known steam ovens, fans are used to drive a flow of air from the galley into the housing of the steam oven, and then to expel the flow of air towards the front of the steam oven. This is done to provide cooling to the electronic components within the steam oven, which can overheat due to their proximity to the heating compartment and/or due to the heat generated by the electronic components themselves.

The steam oven of the first example utilises this flow of air to redirect the steam expelled by the heating compartment. The volume of air that flows through the steam oven to provide cooling is relatively large and thus can easily incorporate the much smaller amount of steam expelled by the heating compartment. Furthermore, the flow of air is typically dry, as there are low moisture levels on the aircraft, and so is capable of absorbing and containing content with higher moisture levels, such as steam. The flow of air is also warmed through its cooling function. As such, this high-flow of air forms an advantageous medium through which steam from the heating compartment can be redirected away from the back of the steam oven and out of the galley compartment in which the steam oven is installed. The steam oven of the first example is therefore advantageous, as it can be formed by retrofitting existing steam ovens with the conduit and the at least one diffuser, thereby allowing the steam from the heating compartment to be redirected as desired without significant alterations to the existing steam oven.

It will be appreciated that the outlet of the heating compartment may be configured to expel not just steam, but both air and steam in combination, and both the air and the steam may be directed to the diffuser via the conduit.

The at least one diffuser may be configured to scatter and/or distribute the steam along a length of the diffuser. The steam may enter the at least one diffuser in a single concentrated flow, which may disperse when it enters the at least one diffuser. Thus, the at least one diffuser may be configured to output a dispersed flow of steam. Advantageously, in some embodiments, this may allow the flow of air to more easily draw in and/or absorb the steam.

The at least one diffuser may comprise at least one outlet for releasing the steam into the flow of air. The at least one outlet may comprise at least one jet, nozzle, and/or opening in the at least one diffuser. The at least one outlet may comprise a plurality of outlets positioned along the length of the diffuser. Alternatively, the at least one outlet may comprise one outlet that extends along (e.g., a majority of) the length of the diffuser. That is, the at least one outlet may comprise a slit that extends along the length of the diffuser. As such, the at least one diffuser may be configured to release the steam into the flow of air at multiple locations along the length of the at least one diffuser. This may be advantageous, as the steam may be more easily absorbed by the flow of air when it is distributed across multiple points in the flow of air, and not released as a single, concentrated flow. Further, this may allow the heat from the steam to be evenly distributed across the flow of air, thereby ensuring that the heat from the steam is evenly distributed across the walls of the housing as the flow of air, together with the steam, is expelled towards the front of the steam oven. This may ensure that no one section of the housing overheats. This may be advantageous as 'hot spots' in the housing may cause injury (i.e., burns) if touched by aircraft staff, or may cause components (such as electrical components) nearby to overheat.

The at least one diffuser is configured to release the steam from the heating compartment into the flow of air as the air is expelled from the housing. For example, the at least one diffuser may be configured to release the steam into the flow of air immediately prior to the flow of air being expelled from the housing. As such, the steam may be carried with the flow of air out of the housing. Alternatively, the at least one diffuser may be configured to release the steam into the flow of air immediately after the flow of air is expelled from the housing. Thus, the steam may be carried forwards by the forward-moving air exiting the housing.

The at least one diffuser may be configured to release the steam into the flow of air at a point immediately downstream of the at least one fan. Thus, the at least one fan may drive the steam together with the flow of air through the housing, and to expel the steam together with flow of air from the housing and towards a front of the steam oven. The flow of air may be particularly turbulent immediately downstream of the at least one fan. Thus, in some embodiments, the steam may be better absorbed into the flow of air when it is released at a point immediately downstream of the at least one fan.

The at least one diffuser may comprise a pipe with at least one steam inlet connected to the conduit, and/or at least one outlet for releasing the steam from the heating compartment into the flow of air. The inlets and outlets of the at least one diffuser may be holes in the pipe. The at least one diffuser may be formed via an injection-moulding process.

The at least one fan (e.g., two fans) may be configured to drive the flow of air over and/or into the at least one diffuser prior to expelling the flow of air from the housing.

The at least one diffuser may comprise at least one air inlet for receiving the flow of air. The steam from the heating compartment may be released into the flow of air as the steam exits the at least one diffuser. The steam may enter the flow of air within the at least one diffuser. In such a case, the at least one outlet of the diffuser may be for releasing both the steam and the flow of air.

The conduit may comprise a flexible, heat-resistant tube. However, it will be appreciated that the conduit is not limited to this particular form, and may have any suitable shape and/or material.

The steam oven may comprise a plurality of vents configured to direct at least the flow of air out of the housing and towards the front of the steam oven. The plurality of vents may be located towards a back of the housing, behind the heating compartment. The at least one fan may be configured to drive the flow of air through the plurality of vents. Due to the angle of the vents, the flow of air driven through the vents may be directed towards the front of the steam oven.

The plurality of vents may be downstream of the diffuser. That is, the at least one diffuser may be configured to release the steam into the flow of air prior to the flow of air being expelled from the housing through the plurality of vents. The plurality of vents may therefore be configured to direct the steam together with the flow of air towards the front of the steam oven. For example, the plurality of vents may be connected to and/or integrally formed with at least one outlet of the at least one diffuser. Alternatively, the plurality of vents may be sufficiently close to the at least one outlet of the at least one diffuser so as to allow the output from the diffuser to be driven through the plurality of vents by the at least one fan. In particular, the at least one outlet of the at least one diffuser may be upstream of the plurality of vents, for example immediately upstream of the plurality of vents, such that the steam released from the at least one outlet is expelled either directly into the plurality of vents with the flow of air, or is released into the flow of air immediately prior to the flow of air entering the plurality of vents. Hence, the plurality of vents can be used to ensure that the exhaust steam from the steam oven is directed away from the back of the steam oven.

It will be understood that the steam oven is not limited to having the plurality of vents downstream of the at least one diffuser. For example, the plurality of vents may be upstream of the at least one diffuser, and may be configured to direct only the flow of air towards the front of the steam oven. In this case, the at least one diffuser may be positioned outside of the housing of the steam oven, and may be configured to release the steam into the flow of air after it has been expelled from the housing and towards the front of the steam oven, or at a point of being expelled.

The plurality of vents may, for example, be a plurality of louvres. The plurality of louvres may extend through one or more side walls of the housing. In particular, at least some of the plurality of louvres may be a plurality of angled apertures extending through one or more side walls of the housing. The plurality of vents or louvres may have been formed by twisting portions of the housing so that the portions become angled with respect to a side of the housing.

Additionally or alternatively, at least some of the plurality of vents may be integral with the at least one diffuser. This may allow the at least one diffuser and the plurality of vents to be manufactured during a single process, such as an injection moulding process. In this case, the plurality of vents may be connected to at least one outlet and/or at least one inlet of the at least one diffuser. The plurality of vents may be a plurality of angled channels extending from the at least one outlet and/or the at least one inlet of the at least one diffuser. The plurality of angled channels may therefore direct the steam and/or the flow of air entering and/or exiting the at least one diffuser towards the front of the steam oven.

The at least one fan may be configured to drive the flow of air over at least one electronic component of the steam oven, prior to steam being released into the flow of air. That is, the at least one electronic component may be upstream of the at least one diffuser with respect to the flow of air. In this way, the flow of air may advantageously be used to cool the at least one electronic component, which can heat up during use and/or as a result of its proximity to the heating compartment of the steam oven. The at least one electronic component may, for example, be a control unit. The at least one electronic component may be therefore be positioned in a path of the flow of air through the steam oven, and/or may be positioned adjacent or in close proximity to the at least one fan. The steam oven may comprise a single path for the flow of air through the steam oven, and the at least one electrical component may be positioned in that path. Alternatively, the steam oven may comprise a plurality of paths and the steam oven may be configured to split the flow of air through the plurality of paths. In this case, the at least one electrical component may be positioned in a first path of the flow of air, which may be a separate path to the path that the portion of the flow of air that the steam is released into flows through.

The steam oven may be a pressure-less steam oven. In this case, the outlet of the heating compartment may be directly connected to the conduit.

The steam oven comprises a steam separator for separating water (i.e. moisture, water vapour, or water particles) in the steam from the air. The steam separator may be any suitable steam separator, such as a condenser, a filtration membrane, and/or a cyclone steam separator. For example, the steam oven may be pressurised and may comprise a steam separator (such as, e.g., a condenser) that comprises at least one valve through which steam (and optionally air) is expelled into the steam separator. The steam separator may be configured to expel at least part of the steam, for example through a gas outlet. The steam separator may be configured to condense the rest of the steam.

The steam separator is connected between the outlet of the heating compartment and the conduit. The steam separator comprises an inlet connected to the outlet of the heating compartment. The steam separator comprises a gas outlet connected to the conduit, the gas outlet being configured to expel the steam from the heating compartment to the conduit. The outlet of the heating compartment is therefore indirectly connected to the conduit via the steam separator. As such, the steam expelled from the heating compartment passes through the steam separator prior to entering the conduit. The at least one fan is configured to drive the flow of air over the steam separator, prior to steam being released into the flow of air. That is, the steam separator is upstream of the at least one diffuser with respect to the flow of air. In this way, the flow of air may advantageously be used to cool the steam separator. This may be particularly advantageous when the steam separator is a condenser, as the condenser will function more efficiently at cooler temperatures, i.e. the ability of the condenser to condense the incoming steam from the heating compartment may be improved at lower temperatures. When the condenser functions more efficiently, the amount of steam expelled from the condenser may be minimised, which in turn minimises the amount of steam that can potentially be expelled towards the back of the steam oven. Minimising the steam expelled towards the front of the steam oven can also be advantageous, as passengers on the aircraft can erroneously believe there is an emergency (e.g., a fire) if they see steam, and workers can fear being burned by the expelled steam, again erroneously.

The flow of air may be heated as it is driven over the at least one electrical component and/or the steam separator. As a result, the ability of the flow of air to absorb the steam, which has a high moisture content, may be improved. It may therefore be particularly advantageous for the at least one diffuser to be configured to release the steam into the flow of air as the air is expelled from the housing (i.e., either immediately before or immediately after the air is expelled), as the point at which the air is expelled from the housing may also be the point at which the air will be the warmest. Thus, the ability of the flow of air to absorb the steam may be improved particularly at the point that the air is expelled from the housing.

The at least one fan may be configured to drive the flow of air into the housing via an air intake aperture. The air intake aperture may be located in a front wall of the housing. The at least one fan may be located towards a back wall of the housing, e.g., towards a back corner of a heating compartment. The steam oven may comprise at least one air passageway in the housing. For example, the at least one air passageway in the housing may comprise a first air passageway connecting the air intake aperture to the plurality of vents. The at least one diffuser and/or the at least one fan may be positioned in the first air passageway. The steam separator and/or the at least one electrical component may be positioned in or adjacent to the first air passageway. Alternatively, the at least one air passageway may comprise a second air passageway that is separate to the first air passageway, and the at least one electrical component may be positioned in the second air passageway.

As mentioned above, the steam separator may be a condenser, and the condenser may comprise at least one heat transfer element on its outer surface. For example, the condenser may comprise at least one fin and/or rib on its outer surface. This may improve heat exchange between the condenser and its surroundings, therefore allowing the condenser to cool down more, e.g. when cooling air is driven over it by the at least one fan, and operate at a lower temperature than without the heat transfer element, allowing the condenser to operate more efficiently.

The steam separator may comprise a liquid outlet configured to release condensed water from the steam separator. The water may be formed by water in the steam from the heating compartment separating from the air and gathering at the bottom of the steam separator. For example, the water may be formed by the steam condensing and gathering at the bottom of the steam separator. Consequently, the liquid outlet of the steam separator may be positioned towards the bottom of the steam separator, thereby allowing the water to exit the liquid outlet through at least gravity. Advantageously, this may allow the water to be collected and re-used in the steam oven, thereby reducing waste. Furthermore, this may ensure that the steam separator does not overfill with the condensed water and fail to function correctly. The liquid outlet may simultaneously act as the inlet of the steam separator. That is, the steam entering the steam separator and the water exiting the steam separator may pass through a single channel of the steam separator, which acts as both the inlet and the water outlet of the steam separator. Alternatively, the inlet of the steam separator and the water outlet of the steam separator may be separate, distinct structures.

The liquid outlet may be connected to the heating compartment and/or a water reservoir of the steam oven. Thus, the steam separator water may be returned to the heating compartment via the liquid outlet, where it can be vaporised and re-used as steam. The water reservoir may be configured to store water for use in the steam oven. During use, the water from the water reservoir may be injected into the heating compartment of the steam oven via an injection nozzle. The steam oven may comprise a heating element within the heating compartment configured to vaporise the water entering the heating compartment, either via the injection nozzle or directly from the liquid outlet of the steam separator. The resulting steam may then be used to heat up the contents of the heating compartment, for example pre-packaged meals. The steam oven may comprise an oven fan configured to distribute the steam evenly throughout the heating compartment, thereby ensuring even heating of the contents.

The steam oven may comprise a first valve configured to control the expulsion of the steam and/or air from the heating compartment. For example, the first valve may be configured to expel the steam and/or air from the heating compartment when the pressure inside the steam separator exceeds a threshold amount. The first valve may be also configured to control the expulsion of the water from the steam separator, e.g. in the case where the water outlet and the inlet of the steam separator are the same channel. The first valve may, for example, be a normally-open (NO) valve. Alternatively, the steam oven may comprise a second valve for controlling the liquid outlet of the steam separator, which may be separate to the first valve. The heating compartment may comprise a third valve for controlling the injection of condensed water from the steam separator into the heating compartment. The third valve may, for example, be a normally-closed (NC) valve. The respective valves may be electronically controlled via a control unit, for example.

The at least one diffuser may comprise a first diffuser and a second diffuser. The first and second diffusers may be located towards opposing side walls of the steam oven. The conduit may be a T-shaped conduit connected to the first diffuser and the second diffuser. Thus, a portion of the steam expelled from the steam separator may enter the first diffuser, and the remaining portion of the steam may enter the second diffuser.

The at least one fan may comprise a first fan and a second fan. The first fan may be configured to drive a first portion of the flow of air through the housing. The first diffuser may be configured to release the steam from the steam separator into the first portion of the flow of air, e.g. as it is expelled from the housing. The second fan may be configured to drive a second portion of the flow of air through the housing. The second diffuser may be configured to release the steam from the steam separator into the second portion of the flow of air, e.g. as it is expelled from the housing. The first fan may be configured to expel the first portion of the flow of air along a first side wall of the housing. The second fan may be configured to expel the second portion of the flow of air along a second, opposing side wall of the housing.

The plurality of vents may comprise a first set of vents and a second set of vents. The first set of vents may be configured to direct the first portion of the flow of air towards the front of the steam oven and along the first side wall of the steam oven. For example, the first set of vents may comprise a plurality of angled apertures extending through the first side wall. The first set of vents may be configured to receive the steam released from the first diffuser with the first portion of the flow of air. The second set of vents may be configured to direct the second portion of the flow of air towards the front of the steam oven and along the second side wall of the steam oven. For example, the second set of vents may comprise a plurality of angled apertures extending through the second side wall. The second set of vents may be configured to receive the steam released from the second diffuser with the second portion of the flow of air.

The above example may allow the steam to be expelled with the flow of air evenly on either side of the steam oven. This may be advantageous as it may prevent the steam from being obstructed or re-directed as it is expelled from the housing, e.g. towards the back of the steam oven.

According to a second example, there may be provided a steam oven for use in an aircraft galley comprising: a steam separator configured to receive at least steam from a heating compartment of the steam oven and to separate water from the air in at least a portion of the steam; at least one fan configured to drive a cooling flow of air into the steam oven and over the steam separator. The steam oven according to the second example may include any of the features of the first example, including any optional features thereof. For example, the steam separator may be a condenser, and the condenser may comprise at least one heat transfer element on its outer surface. The at least one heat transfer element may comprise a rib or a fin. In one example, the condenser comprises an array of heat transfer elements on its outer surface.

According to a third example, there is provided a method of releasing steam from a steam oven in an aircraft galley, the method comprising: supplying at least steam from a heating compartment of the steam oven to at least one diffuser of the steam oven; drawing a flow of air into a housing of the steam oven using at least one fan; expelling the flow of air from the housing and towards a front of the steam oven; and releasing the steam from the at least one diffuser into the flow of air, such that the steam is expelled with the flow of air from the housing and towards the front of the steam oven.

The method may include releasing the steam from the at least one diffuser into the flow of air as the air is expelled from the housing, e.g. at a point immediately prior to the air being expelled from the housing, or at a point immediately after the air is expelled from the housing. The method may include releasing the steam from the at least one diffuser into the flow of air at a point immediately downstream of the at least one fan.

The method of the third example may be for releasing steam from a steam oven according to the first and/or second example, including any optional features thereof.

According to a fourth example, there may be provided a steam oven for use in an aircraft galley comprising: a housing; a heating compartment comprising an outlet configured to expel at least steam from the heating compartment; at least one fan configured to drive a flow of air through the housing, and to expel the flow of air from the housing and towards a front of the steam oven; and a conduit connected to the outlet of the heating compartment; wherein the conduit is configured to release the steam from the heating compartment into the flow of air at a point downstream of the at least one fan, such that the steam is expelled with the flow of air from the housing and towards the front of the steam oven.

The steam oven of the fourth example may include any of the features of the first to third examples, including any optional features thereof.

According to a fifth example, there may be provided a steam oven for use in an aircraft galley comprising: a condenser configured to receive at least steam from a heating compartment of the steam oven and to condense at least a portion of the steam; wherein the condenser comprises at least one heat transfer element on its outer surface.

The steam oven according to the fifth example may include any of the features of the first to fourth examples, including any optional features thereof.

The following is a detailed description with reference to the figures given by way of example only.

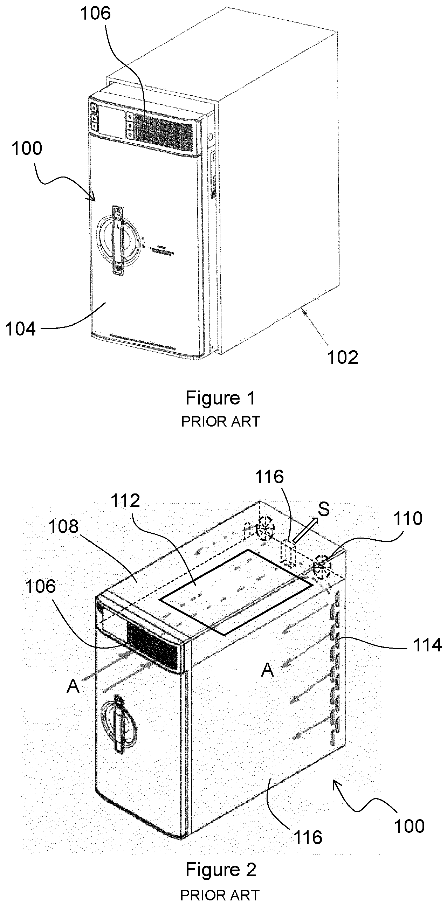

Figure 1 shows a steam oven 100 that is being housed within a galley compartment 102 in an aircraft. The galley compartment 102 may be located within a galley of the aircraft. The galley compartment 102 may be one of a set of galley compartments 102 providing the galley. As can be seen from figure 1, the front portion of the galley compartment 102 is open to allow insertion of the steam oven 100, whilst the back portion of the galley compartment 102 - although not visible in figure 1 - is closed. The front of the steam oven 100 is exposed, thereby allowing access to the door 104 by aircraft workers. The door 104 is for accessing a heating compartment of the steam oven 100, in which contents such as pre-packaged meals can be placed for heating mid-flight. An air intake aperture 106 is also located in a front wall of the housing of the steam oven 100, through which a flow of air from the galley can enter the housing of the steam oven 100.

Figure 2 shows the prior art steam oven 100 outside of the galley compartment 102. During use, a flow of air A is drawn through air intake 106 and into a top compartment 108 of the steam oven housing by fans 110. The air A taken from the galley is dry and cool, as there is little moisture in aircraft air. As such, the air A is used to cool electronic components in the top compartment 108, such as control unit 112, by being driven over the electronic components by fans 110. After the air A is driven through the top compartment 108, it is then driven through louvres 114 extending through the side walls 116 of the steam oven housing. The louvres 114 are angled so as to direct the air A being expelled towards the front of the steam oven, so that it does not stagnate at the closed back portion of the galley compartment 102 and to improve the flow of air generally.

Though not visible in figures 1 or 2, the heating compartment of the steam oven 100 lies below the top compartment 108. The heating compartment usually takes the form of a cuboid space which takes up a majority of the housing's volume. In the heating compartment, steam is generated by vaporising water that has been injected into the heating compartment towards a heating element. The steam is circulated around the heating compartment so that it heats up the contents. In pressurised steam ovens, when the pressure in the heating compartment rises too high, some of the steam is expelled, along with some air, into condenser 116 towards the back of the steam oven. Whilst a condenser 116 is shown in figures 1 and 2, it will be appreciated that any device may be used alternatively that is suitable for separating water in the steam from the air. A portion of the steam inside condenser 116 condenses into water, which may be collected and re-used within the steam oven 100, or may be discarded. However, not all of the steam in the condenser 116 will condense. This remaining steam S must therefore be expelled from the condenser 116. As can be seen from figure 2, in prior art systems, the steam S is expelled by the condenser 116 towards the back of the steam oven 100 and into the back of the galley compartment 102.

Whilst a pressurised steam oven 100 with a condenser 116 is shown in figure 2, some steam ovens are pressure-less and do not comprise a condenser 116. In this case, the steam S is expelled directly from the heating compartment towards the back of the steam oven 100 and into the back of the galley compartment 102.

As the galley compartment 102 is closed at the back, the steam S will get stuck and will partially condense in the back of the galley compartment 102. Typically, several important components are located at the back of the steam oven 100 and galley compartment 102, such as electrical connectors, wiring, ducting, and plumbing. When the steam S condenses, the resulting condensed water can cause issues such as short circuiting in these important components. Further, the condensed water can create fungus growth, which can further impact the functioning of components at the back of the steam oven 100 and galley compartment 102, can cause hygiene risks, and/or can cause corrosion.

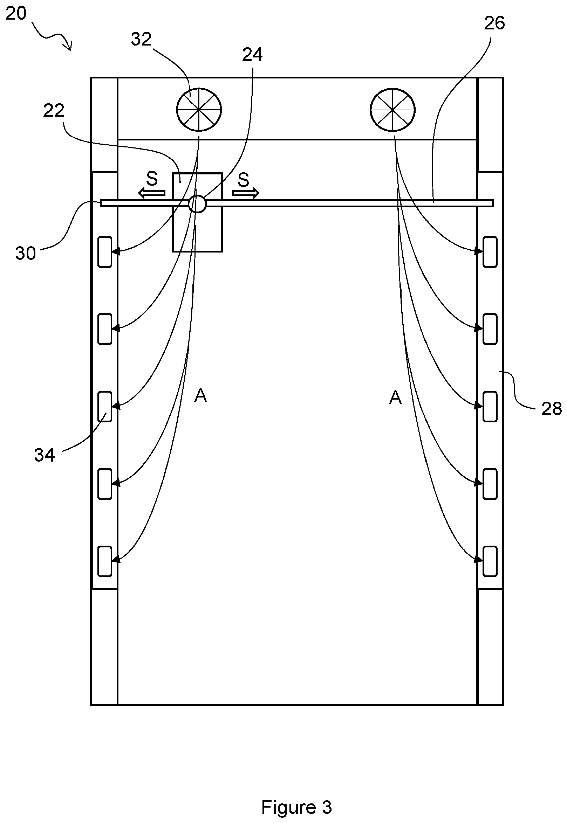

To prevent the issues caused by steam S gathering in the back of the galley compartment 102, a steam oven 20 with a modified condenser arrangement is shown in figure 3. Whilst figure 3 shows the steam oven 20 comprising a condenser 22, it will be appreciated that any suitable form of device may alternatively be used that is suitable for separating water in the steam from the air. Figure 3 shows a rear view of steam oven 20. In steam oven 20, a gas outlet 24 of the condenser 22 is connected to a T-shaped conduit 26. The conduit 26 could have other branched shapes. In this example, the conduit 26 is a flexible, heat-resistant tubing. The conduit 26 is connected to diffusers 28 (e.g., left and right diffusers 28) located towards opposing side walls of the steam oven 20. As shown, the diffusers 28 may comprise tubes with a plurality of apertures within to act as inlets and/or outlets. During use, the steam S expelled from gas outlet 24 is not directly expelled towards the back of the steam oven 20; instead the steam S enters conduit 26, and is directed towards diffusers 28. The steam S then enters the diffusers 28 via a steam inlet 30. It will be appreciated that some air may also be expelled from gas outlet 24 and travel with steam S.

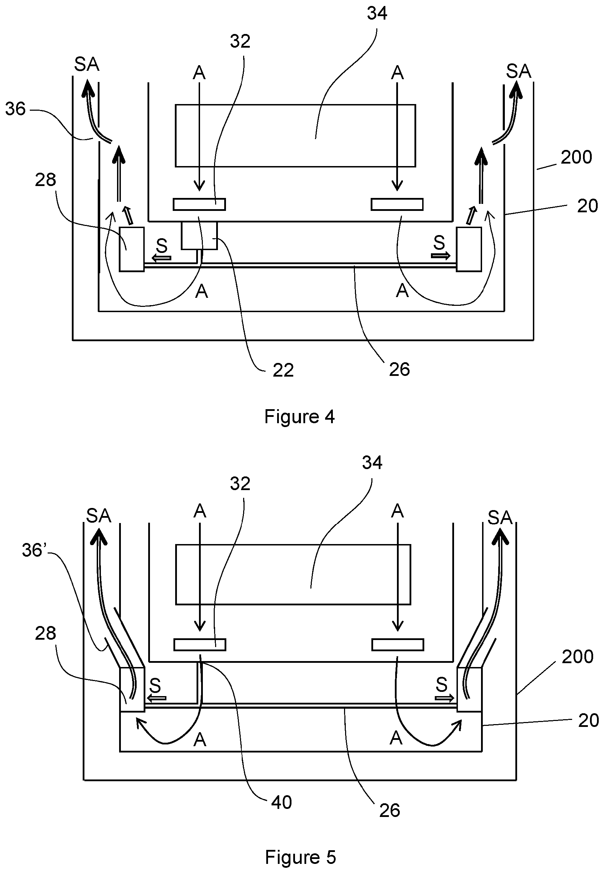

As with the prior art steam oven of figures 1 and 2, a flow of air A is driven through a top part of the housing of the steam oven 20 by fans 32. However, instead of the flow of air A being expelled directly through louvres, the flow of air A in the example of figure 3 is first driven into and/or around the diffusers 28, e.g., via a plurality of air inlets 34. In the diffusers 28, the flow of air A is mixed with the steam to form a steam-air mixture SA, which is expelled towards the front of the steam oven, as will be described in further detail with reference to figures 4 and 5. Prior to this, the flow of air A is driven over the condenser 22 by fans 32. The flow of air A is cool and dry, and therefore is used to cool condenser 22. This aids condensation in the condenser 22, thereby reducing the amount of steam S expelled, and creating more condensed water for re-use in the steam oven 20.

Figures 4 and 5 show two examples of the steam oven 20 from a top view. In Figures 4 and 5, the steam oven 20 is shown positioned within a galley compartment 200.

As explained with reference to figure 3, steam S is expelled from condenser 22 and directed by conduit 26 to diffusers 28. Meanwhile, the flow of air A is driven through a top of the steam oven housing by fans 32. The flow of air A is cool and dry, and therefore is used to cool down electronic components of the steam oven 20, such as control unit 34. As the flow of air A has been used to cool both the control unit 34 and the condenser 22, the flow of air A will be warmed prior to mixing with the steam S. This allows the flow of air A to combine well with the moist steam S. Although the flow of air A is shown as passing over the control unit 34 before being mixed with the steam S in the specific example of figure 3, it will be appreciated that the flow of air A that mixes with the steam S may alternatively be directed so that it does not flow over the control unit 34.

In contrast to figure 3, the flow of air A in the embodiment of figure 4 is not driven through the diffusers 28. The diffusers 28 in this embodiment therefore do not comprise the plurality of air inlets 34 shown in figure 2. Instead, the flow of air A is driven around the diffusers 28. The steam S is released by the diffusers 28 into the path of the flow of air A, where it is mixed with the flow of air A to form steam-air mixture SA, and is then directed towards the front of the steam oven 20 through vents 36. Thus, the steam S is prevented (as far as possible) from entering the back of the galley compartment 200. As the diffusers 28 are positioned at opposing sides of the steam oven 20, the steam-air mixture SA is expelled along both sides of the steam oven 20 and therefore is evenly distributed about the steam oven 20.

In the example of figure 4, the vents 36 are shown as louvres, i.e., as apertures in the side walls of the steam oven 20 which are in close proximity to the outlets of the diffusers 28. Though not visible in figure 4, the louvres 36 are angled (e.g., at between 30-60° to the side of the housing) so as to direct the steam-air mixture SA towards the front of the steam oven 20.

An alternative example of the c steam oven 20 is shown in figure 5. In this example, the steam oven 20 is pressure-less and does not comprise a condenser or any other form of steam separator. Thus, the conduit 26 is connected directly to an outlet 40 of the heating compartment, such that the steam S is expelled from the outlet 40 and into the conduit 26 without passing through a condenser or a steam separator.

The flow of air A in the example of figure 5 is driven through the diffusers 28 and is mixed within the diffusers 28 with the steam to form mixture SA, as is also shown in figure 3. The vents 36' are also integral with the diffusers 28 in this example. The vents 36' form angled channels that extend from the outlets of the diffusers 28 and direct the steam-air mixture SA in the diffusers 28 towards the front of the steam oven 20.

Whilst the vents 36, 36' are shown as being downstream of the diffusers 28 in figures 4 and 5, it will be appreciated that the vents 36, 36' could be - either additionally or alternatively - upstream of the diffusers 28. In this case, the vents 36, 36' would direct the flow of air A towards the front of the steam oven 20, such that the forward-moving flow of air A will continue to carry the steam S forward after the steam-air mixture SA is formed, either in diffusers 28 or just downstream of the diffusers 28.

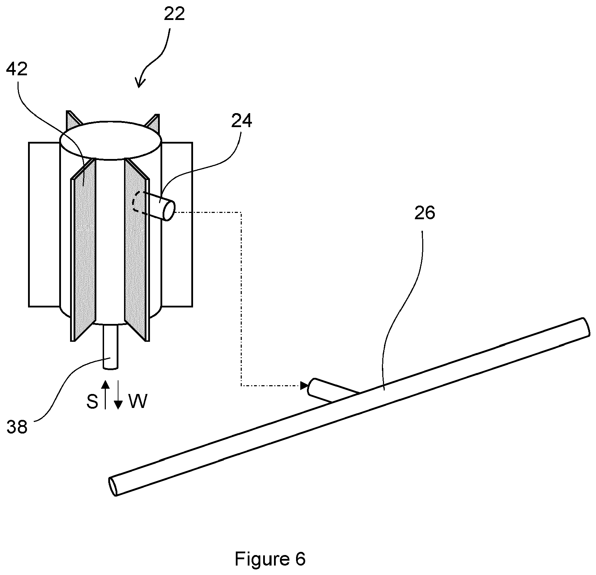

An optional form of the condenser 22 is shown in greater detail in figure 6. The condenser 22 comprises gas outlet 24 and a channel 38. Steam S (and optionally air) from the heating compartment of the steam oven 20 enters the condenser 22 via channel 38. A portion of the steam S that enters the condenser 22 condenses into water W, which gathers at the bottom of the condenser 22. The remaining steam that does not condense is expelled to conduit 26 via gas outlet 24, as described with reference to the previous figures.

The water can be expelled from the condenser 22 via channel 38. Thus, the channel 38 can act as both an inlet of the condenser 22 and a liquid outlet of the condenser 22. It will however be appreciated that the condenser 22 can also be implemented with an inlet that is separate to the water outlet. Although not shown in figure 6, the channel 38 can connect either to a water reservoir of the steam oven 20, or can connect back directly to the heating compartment of the steam oven 10. The condensed water can then be re-used to create steam in the heating compartment of the steam oven 20. For example, an injection nozzle can be used to inject water from the water reservoir into the heating compartment. The water in the heating compartment is heated and vaporised by a heating element so that it becomes steam. The steam is then circulated around the heating compartment in order to heat its contents, after which the steam is expelled into condenser 22.

The channel 38 of the condenser 22 may be controlled via a valve, such as a normally-open valve, which may be an electronic valve controlled by control unit 34.

In order to encourage condensation, the condenser 22 may comprise additional heat transfer elements such as a plurality of fins 42 on its outer surface. The fins 42 encourage heat transfer with the cooling air A that is driven over the condenser 22. As such, more steam will condense within the condenser 22, and the resulting water can be re-used in the steam oven 20. This is advantageous, as the re-used water is relatively hot, and so will not cause the temperature of the heating compartment to drop, unlike if external, cold water were injected. A steam oven 20 comprising a condenser 22 provided with heat transfer elements on its outer surface arranged within an auxiliary air flow of the steam oven is advantageous in its own right and can be used independently or in combination with a conduit / diffuser arrangement, and in combination with any of the above optional features.

## Claims

1. A steam oven for use in an aircraft galley, comprising:
a housing;
a heating compartment comprising an outlet (40) configured to expel at least steam from the heating compartment; and
at least one fan (32) configured to drive a flow of air through the housing, and to expel the flow of air from the housing and towards a front of the steam oven; wherein the steam oven is **characterised by**:
at least one diffuser (28), wherein the at least one diffuser (28) is configured to release the steam from the heating compartment into the flow of air, such that the steam is expelled with the flow of air from the housing and towards the front of the steam oven;
a conduit (26) connecting the outlet (40) of the heating compartment to an inlet of the at least one diffuser; and
a steam separator for separating water from the air in the steam, wherein the steam separator (22) comprises an inlet (38) for receiving the steam from the heating compartment and a gas outlet (24) connected to the conduit (26), the gas outlet (24) being configured to expel the steam from the heating compartment to the conduit (26),
wherein the at least one fan (32) is configured to drive the flow of air over the steam separator, the steam separator being upstream of the at least one diffuser (28) with respect to the flow of air.

2. A steam oven according to claim 1, comprising a plurality of vents (36; 36') configured to direct at least the flow of air towards the front of the steam oven.

3. A steam oven according to claim 2, wherein the plurality of vents (36; 36') are downstream of the at least one diffuser, and are configured to direct the steam from the heating compartment with the flow of air towards the front of the steam oven.

4. A steam oven according to claim 2 or 3, wherein the plurality of vents (36; 36') are integrally formed with the at least one diffuser (28).

5. A steam oven according to any preceding claim, wherein the at least one fan (32) is configured to drive the flow of air over at least one electronic component (34), the at least one electronic component (34) being upstream of the at least one diffuser (28) with respect to the flow of air.

6. A steam oven according to any preceding claim, wherein the steam separator comprises at least one heat transfer element on its outer surface.

7. A steam oven according to any preceding claim, wherein the steam separator comprises a liquid outlet configured to release separated water from the steam separator into the heating compartment of the steam oven.

8. A steam oven according to any preceding claim, wherein the at least one diffuser comprises a first diffuser and a second diffuser located towards opposing side walls (116) of the housing, and the conduit (26) is a T-shaped conduit connected to the first and second diffusers (28).

9. A steam oven according to claim 8, wherein the at least one fan (32) comprises:
a first fan configured to drive a first portion of the flow of air through the housing, wherein the first diffuser is configured to release the steam from the heating compartment into the first portion of the flow of air, and
a second fan configured to drive a second portion of the flow of air through the housing, wherein the second diffuser is configured to release the steam from the heating compartment into the second portion of the flow of air.

10. A steam oven according to any preceding claim, wherein the steam separator is a condenser (22), a cyclone steam separator or a filtration membrane.

11. A steam oven according to any of claims 1 to 9, wherein the steam separator is a condenser (22), and the condenser (22) comprises at least one heat transfer element on its outer surface.

12. A method of releasing steam from a steam oven in an aircraft galley, the method is **characterised by**:
supplying at least steam from a heating compartment of the steam oven to at least one diffuser (28) of the steam oven;
drawing a flow of air into a housing of the steam oven using at least one fan (32);
directing the steam from the heating compartment through a steam separator (22) prior to supplying the steam to the at least one diffuser;
driving the flow of air over the steam separator, wherein the steam separator is upstream of the at least one diffuser;
expelling the flow of air from the housing and towards a front of the steam oven (20); and
releasing the steam from the at least one diffuser into the flow of air, such that the steam is expelled with the flow of air from the housing and towards the front of the steam oven.

13. A method according to claim 12, including directing at least the flow of air towards the front of the steam oven using a plurality of vents (36; 36').

14. A method according to claim 12 or 13, wherein the steam separator is a condenser (22), a cyclone steam separator or a filtration membrane.

15. A method according to claim 12 or 13, wherein the steam separator is a condenser (22), and the condenser (22) comprises at least one heat transfer element on its outer surface.

## Patentansprüche

1. Dampfofen zur Verwendung in einer Flugzeuggalley, umfassend:
ein Gehäuse;
einen Heizraum, der einen Auslass (40) umfasst, der konfiguriert ist, um zumindest Dampf aus dem Heizraum auszustoßen; und
mindestens einen Lüfter (32), der konfiguriert ist, um einen Luftstrom durch das Gehäuse zu treiben und den Luftstrom aus dem Gehäuse und zu einer Vorderseite des Dampfofens auszustoßen; wobei der Dampfofen **dadurch gekennzeichnet ist, dass** er umfasst:
mindestens einen Diffusor (28), wobei der mindestens eine Diffusor (28) konfiguriert ist, um den Dampf aus dem Heizraum in den Luftstrom abzugeben, sodass der Dampf mit dem Luftstrom aus dem Gehäuse und zur Vorderseite des Dampfofens ausgestoßen wird;
eine Leitung (26), die den Auslass (40) des Heizraums mit einem Einlass des mindestens einen Diffusors verbindet; und
einen Dampfabscheider zum Trennen von Wasser von der Luft im Dampf, wobei der Dampfabscheider (22) einen Einlass (38) zum Aufnehmen des Dampfes aus dem Heizraum und einen Gasauslass (24) umfasst, der mit der Leitung (26) verbunden ist, wobei der Gasauslass (24) konfiguriert ist, um den Dampf aus dem Heizraum an die Leitung (26) auszustoßen,
wobei der mindestens eine Lüfter (32) konfiguriert ist, um den Luftstrom über den Dampfabscheider zu treiben, wobei der Dampfabscheider in Bezug auf den Luftstrom stromaufwärts des mindestens einen Diffusors angeordnet ist.

2. Dampfofen nach Anspruch 1, umfassend eine Vielzahl von Lüftungsöffnungen (36; 36'), die konfiguriert sind, um zumindest den Luftstrom zur Vorderseite des Dampfofens zu lenken.

3. Dampfofen nach Anspruch 2, wobei die Vielzahl von Lüftungsöffnungen (36; 36') stromabwärts des mindestens einen Diffusors angeordnet sind und konfiguriert sind, um den Dampf aus dem Heizraum mit dem Luftstrom zur Vorderseite des Dampfofens zu lenken.

4. Dampfofen nach Anspruch 2 oder 3, wobei die Vielzahl von Lüftungsöffnungen (36; 36') integral mit dem mindestens einen Diffusor (28) ausgebildet sind.

5. Dampfofen nach einem der vorangehenden Ansprüche, wobei der mindestens eine Lüfter (32) konfiguriert ist, um den Luftstrom über mindestens eine elektronische Komponente (34) zu treiben, wobei die mindestens eine elektronische Komponente (34) in Bezug auf den Luftstrom stromaufwärts des mindestens einen Diffusors (28) angeordnet ist.

6. Dampfofen nach einem der vorangehenden Ansprüche, wobei der Dampfabscheider mindestens ein Wärmeübertragungselement an seiner Außenfläche umfasst.

7. Dampfofen nach einem der vorangehenden Ansprüche, wobei der Dampfabscheider einen Flüssigkeitsauslass umfasst, der konfiguriert ist, um abgeschiedenes Wasser aus dem Dampfabscheider in den Heizraum des Dampfofens abzugeben.

8. Dampfofen nach einem der vorangehenden Ansprüche, wobei der mindestens eine Diffusor einen ersten Diffusor und einen zweiten Diffusor umfasst, die zu gegenüberliegenden Seitenwänden (116) des Gehäuses hin angeordnet sind, und die Leitung (26) eine T-förmige Leitung ist, die mit dem ersten und dem zweiten Diffusor (28) verbunden ist.

9. Dampfofen nach Anspruch 8, wobei der mindestens eine Lüfter (32) umfasst:
einen ersten Lüfter, der konfiguriert ist, um einen ersten Teil des Luftstroms durch das Gehäuse zu treiben, wobei der erste Diffusor konfiguriert ist, um den Dampf aus dem Heizraum in den ersten Teil des Luftstroms abzugeben, und
einen zweiten Lüfter, der konfiguriert ist, um einen zweiten Teil des Luftstroms durch das Gehäuse zu treiben, wobei der zweite Diffusor konfiguriert ist, um den Dampf aus dem Heizraum in den zweiten Teil des Luftstroms abzugeben.

10. Dampfofen nach einem der vorangehenden Ansprüche, wobei der Dampfabscheider ein Kondensator (22), ein Zyklon-Dampfabscheider oder eine Filtrationsmembran ist.

11. Dampfofen nach einem der Ansprüche 1 bis 9, wobei der Dampfabscheider ein Kondensator (22) ist und der Kondensator (22) mindestens ein Wärmeübertragungselement an seiner Außenfläche umfasst.

12. Verfahren zum Ablassen von Dampf aus einem Dampfofen in einer Flugzeuggalley, wobei das Verfahren **dadurch gekennzeichnet ist, dass** es umfasst:
Zuführen von zumindest Dampf aus einem Heizraum des Dampfofens zu mindestens einem Diffusor (28) des Dampfofens;
Einleiten eines Luftstroms in ein Gehäuse des Dampfofens unter Verwendung mindestens eines Lüfters (32);
Leiten des Dampfes aus dem Heizraum durch einen Dampfabscheider (22) vor dem Zuführen des Dampfes zu dem mindestens einen Diffusor;
Treiben des Luftstroms über den Dampfabscheider, wobei der Dampfabscheider stromaufwärts des mindestens einen Diffusors angeordnet ist;
Ausstoßen des Luftstroms aus dem Gehäuse und zu einer Vorderseite des Dampfofens (20); und
Abgeben des Dampfes aus dem mindestens einen Diffusor in den Luftstrom, sodass der Dampf mit dem Luftstrom aus dem Gehäuse und zur Vorderseite des Dampfofens ausgestoßen wird.

13. Verfahren nach Anspruch 12, umfassend das Lenken zumindest des Luftstroms zur Vorderseite des Dampfofens unter Verwendung einer Vielzahl von Lüftungsöffnungen (36; 36').

14. Verfahren nach Anspruch 12 oder 13, wobei der Dampfabscheider ein Kondensator (22), ein Zyklon-Dampfabscheider oder eine Filtrationsmembran ist.

15. Verfahren nach Anspruch 12 oder 13, wobei der Dampfabscheider ein Kondensator (22) ist und der Kondensator (22) mindestens ein Wärmeübertragungselement an seiner Außenfläche umfasst.

## Revendications

1. Four à vapeur destiné à être utilisé dans une office d'aéronef, comprenant :
un carter ;
un compartiment de chauffe comprenant une sortie (40) configurée pour évacuer au moins de la vapeur hors du compartiment de chauffe ; et
au moins un ventilateur (32) configuré pour entraîner un flux d'air à travers le carter, et pour évacuer le flux d'air hors du carter et en direction d'une face avant du four à vapeur ; le four à vapeur étant **caractérisé par** :
au moins un diffuseur (28), le au moins un diffuseur (28) étant configuré pour libérer la vapeur du compartiment de chauffe dans le flux d'air, de telle sorte que la vapeur soit évacuée avec le flux d'air hors du carter et en direction de la face avant du four à vapeur ;
un conduit (26) reliant la sortie (40) du compartiment de chauffe à une entrée du au moins un diffuseur ; et
un séparateur de vapeur destiné à séparer l'eau de l'air dans la vapeur, le séparateur de vapeur (22) comprenant une entrée (38) pour recevoir la vapeur du compartiment de chauffe et une sortie de gaz (24) reliée au conduit (26), la sortie de gaz (24) étant configurée pour évacuer la vapeur du compartiment de chauffe vers le conduit (26),
dans lequel le au moins un ventilateur (32) est configuré pour entraîner le flux d'air au-dessus du séparateur de vapeur, le séparateur de vapeur étant situé en amont du au moins un diffuseur (28) par rapport au flux d'air.

2. Four à vapeur selon la revendication 1, comprenant une pluralité d'évents (36 ; 36') configurés pour diriger au moins le flux d'air en direction de la face avant du four à vapeur.

3. Four à vapeur selon la revendication 2, dans lequel la pluralité d'évents (36 ; 36') sont situés en aval du au moins un diffuseur, et sont configurés pour diriger la vapeur du compartiment de chauffe avec le flux d'air en direction de la face avant du four à vapeur.

4. Four à vapeur selon la revendication 2 ou 3, dans lequel la pluralité d'évents (36 ; 36') sont formés d'un seul tenant avec le au moins un diffuseur (28).

5. Four à vapeur selon l'une quelconque des revendications précédentes, dans lequel le au moins un ventilateur (32) est configuré pour entraîner le flux d'air au-dessus d'au moins un composant électronique (34), le au moins un composant électronique (34) étant situé en amont du au moins un diffuseur (28) par rapport au flux d'air.

6. Four à vapeur selon l'une quelconque des revendications précédentes, dans lequel le séparateur de vapeur comprend au moins un élément de transfert de chaleur sur sa surface extérieure.

7. Four à vapeur selon l'une quelconque des revendications précédentes, dans lequel le séparateur de vapeur comprend une sortie de liquide configurée pour libérer l'eau séparée du séparateur de vapeur dans le compartiment de chauffe du four à vapeur.

8. Four à vapeur selon l'une quelconque des revendications précédentes, dans lequel le au moins un diffuseur comprend un premier diffuseur et un second diffuseur situés vers des parois latérales opposées (116) du carter, et le conduit (26) est un conduit en forme de T relié aux premier et second diffuseurs (28).

9. Four à vapeur selon la revendication 8, dans lequel le au moins un ventilateur (32) comprend :
un premier ventilateur configuré pour entraîner une première partie du flux d'air à travers le carter, dans lequel le premier diffuseur est configuré pour libérer la vapeur du compartiment de chauffe dans la première partie du flux d'air, et
un second ventilateur configuré pour entraîner une seconde partie du flux d'air à travers le carter, dans lequel le second diffuseur est configuré pour libérer la vapeur du compartiment de chauffe dans la seconde partie du flux d'air.

10. Four à vapeur selon l'une quelconque des revendications précédentes, dans lequel le séparateur de vapeur est un condenseur (22), un séparateur de vapeur à cyclone ou une membrane de filtration.

11. Four à vapeur selon l'une quelconque des revendications 1 à 9, dans lequel le séparateur de vapeur est un condenseur (22), et le condenseur (22) comprend au moins un élément de transfert de chaleur sur sa surface extérieure.

12. Procédé de libération de vapeur d'un four à vapeur dans une office d'aéronef, le procédé étant **caractérisé par** :
la fourniture d'au moins de la vapeur d'un compartiment de chauffe du four à vapeur vers au moins un diffuseur (28) du four à vapeur ;
l'aspiration d'un flux d'air dans un carter du four à vapeur au moyen d'au moins un ventilateur (32) ;
l'acheminement de la vapeur du compartiment de chauffe à travers un séparateur de vapeur (22) avant de fournir la vapeur au au moins un diffuseur ;
l'entraînement du flux d'air au-dessus du séparateur de vapeur, le séparateur de vapeur étant situé en amont du au moins un diffuseur ;
l'évacuation du flux d'air hors du carter et en direction d'une face avant du four à vapeur (20) ; et
la libération de la vapeur du au moins un diffuseur dans le flux d'air, de telle sorte que la vapeur soit évacuée avec le flux d'air hors du carter et en direction de la face avant du four à vapeur.

13. Procédé selon la revendication 12, comprenant la direction d'au moins le flux d'air en direction de la face avant du four à vapeur au moyen d'une pluralité d'évents (36 ; 36').

14. Procédé selon la revendication 12 ou 13, dans lequel le séparateur de vapeur est un condenseur (22), un séparateur de vapeur à cyclone ou une membrane de filtration.

15. Procédé selon la revendication 12 ou 13, dans lequel le séparateur de vapeur est un condenseur (22), et le condenseur (22) comprend au moins un élément de transfert de chaleur sur sa surface extérieure.
